(19)

Europäisches
Patentamt

European
Patent Office

Office européen
des brevets

(11) **EP 3 276 399 A1**

(12) **EUROPEAN PATENT APPLICATION**

(43) Date of publication:
**31.01.2018 Bulletin 2018/05**

(51) Int Cl.:
**G02C 7/02** *(2006.01)*

(21) Application number: **16182072.5**

(22) Date of filing: **29.07.2016**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Essilor International
94220 Charenton-le-Pont (FR)**

(72) Inventors:
• **YEO, Anna
Singapore 39346 (SG)**
• **GOULET, Alain
94220 CHARENTON-LE-PONT (FR)**

(74) Representative: **Cabinet Plasseraud
66, rue de la Chaussée d'Antin
75440 Paris Cedex 09 (FR)**

(54) **METHOD FOR DETERMINING A PROGRESSIVE OPHTHALMIC LENS FOR MYOPIC WEARERS**

(57)    The present invention relates to a method for determining an ophthalmic lens intended to be worn in front of an eye of a wearer, the ophthalmic lens comprising a first vision point and a second vision point located below the first vision point, wherein said wearer has prescription data, wherein said prescription data comprises a sphere power $S_1$ for said eye of the wearer and optionally a cylinder power $C_1$ with a cylinder axis $\gamma_1$ for said eye, with

$$(-3\,\text{D}) \leq S_1 + \frac{C_1}{2} \leq -0.5\text{D},$$ the method comprising determining an ophthalmic lens by taking into account the

sphere power $S_1$ and optionally the cylinder power $C_1$, without taking into account any addition value, determining the ophthalmic lens comprising:
- providing said sphere power $S_1$ and optionally said cylinder power $C_1$ with said cylinder axis $\gamma_1$, at the first vision point;
- forcing a mean sphere power Rm at the second vision point, such that $(0.75\,\text{D}) \leq \text{Rm} \leq 0.25\text{D}$ and

$$0.5\,\text{D} \leq \text{Rm} - (S_1 + \frac{C_1}{2}).$$

EP 3 276 399 A1

Determining a first vision point

Determining a second vision point

Providing a sphere power equalling
the sphere power S
at the first vision point

Providing a cylinder power and axis
equalling resp. the cylinder power C
and axis $g$ at the first vision point

Forcing Rm at 0.75D to 0.25D
at the second vision point and
Rm – (S+C/2) ≥ 0.5

Forcing Cm at C ± 0.12D
at the second vision point

Forcing $gm$ at $g$
at the second vision point

FIG. 13

**Description**

Technical field

The present invention relates to the technical field of ophthalmic lens determination, more particularly to the technical field of methods for determining an ophthalmic lens intended to be worn in from of an eye of a short-sighted wearer.

Prior art

In an internal study, it was found that 29% to 36% of slight short-sighted persons (up to -2D) do not use their spectacles when performing tasks requiring near vision, such as using mobile phones. This is believed to be due to the fact that slight short-sighted persons are able to see without correction up to a distance of the arm length, *i.e.* about 50 cm. Consequently, many of them choose not to wear any spectacles if they are carrying tasks involving predominantly near vision or constantly alternating between near vision and far vision. Indeed, current ophthalmic lens for myopes are single vision lenses.

According to the study, not wearing the far vision prescription while doing activities necessitating near vision is more convenient since no accommodation is needed. Such behaviour is typical of slight short-sighted who have recently developed myopia. These ophthalmic lens wearers are also usually young, thus not suffering presbyopia.

However, without correction, a recent/slight myope may eventually experience further myopia progression since undercorrection has been found to worsen the condition (Chung *et al.*, 2002; Adler and Millodo, 2006). Thus, according to the studies, myopia correction is important even for recent/slight myopes. Unfortunately, this is conflicting with the want of comfort.

Yet, lag of accommodation at near vision induced by a minus lens is associated with myopia progression. In order to reduce the influence of lag of accommodation, on current solution to manage myopia progression is using progressive or bifocal lenses. A study by Gwiasda *et al.* (2001), found that addition of +2 D in the Myopilux Pro was the most effective.

However, due to social association of progressive and bifocal lenses with elderly people, who are the most likely to be presbyopes, these lenses are not well-accepted by the younger ones.

Therefore, there is still a need to address both the necessity to provide adequate correction to the recent/slight myopes and at the same time increase their comfort at short vision.

Summary of the invention

To this aims, the invention provides a method, especially a computer implemented one, for determining an ophthalmic lens intended to be worn in front of an eye of a wearer, the ophthalmic lens comprising a first vision point and a second vision point located below the first vision point, wherein said wearer has prescription data, wherein said prescription data comprises a sphere power $S_1$ for said eye of the wearer and optionally a cylinder power $C_1$ with a cylinder axis $\gamma_1$ for said eye, with $(-3\,\mathrm{D}) \leq S_1 + \dfrac{C_1}{2} \leq -0.5\mathrm{D},$ the method comprising determining an ophthalmic lens by taking into account the sphere power $S_1$ and optionally the cylinder power $C_1$, without taking into account any addition value, determining the ophthalmic lens comprising:

- providing said sphere power $S_1$ and optionally said cylinder power $C_1$ with said cylinder axis $\gamma_1$, at the first vision point;
- forcing a mean sphere power Rm at the second vision point, such that

$$(-0.75\,\mathrm{D}) \leq \mathrm{Rm} \leq 0.25\mathrm{D} \text{ and } 0.5\,\mathrm{D} \leq \mathrm{Rm} - (S_1 + \frac{C_1}{2}).$$

Thus, when the wearer uses the ophthalmic lens for near vision activities, the eye will see through the zone around or below the second vision point. Due to the very low mean power in this zone, *i.e.* close or equal to zero, the eye will not need to accommodate much, thus providing a more comfortable experience in comparison with single vision ophthalmic lenses. Further, because the mean power value in the zone around the second vision point is close or equal to zero, lag of accommodation is very short if not inexistent. Therefore, the invention provides a mean to avoid myopia progression due to lack of correction and to lag of accommodation. Comfort is also increased due to the absence of the demagnification effect induced by minus value lenses so that in near vision activities, such as reading, the size of the object seen through the ophthalmic lens, such as character size, is not reduced. Psychological impact on young wearer may also be reduced since the ophthalmic lens is not a progressive or bifocal lens initially intended for the elderly.

Other optionally and non-limiting features are as follows.

The present method must be clearly differentiated from those for determining progressive and/or bifocal ophthalmic lenses. Indeed, in the latter methods, two prescription data are needed: a first one at far vision, and a second one at near vision compensating for lack of accommodation

In one embodiment, when $(-3\,\mathrm{D}) \le \mathrm{S}_1 + \dfrac{C_1}{2} < (-1.5\,\mathrm{D}),$ the mean power value Rm is forced to be between at -0.75 D to 0 D, these values being included.

In another embodiment, when $(-1.5\,\mathrm{D}) \le \mathrm{S}_1 + \dfrac{C_1}{2} \le 0\,\mathrm{D},$ the mean power value Rm is forced to be between -0.25 D and +0.25 D, these values being included, preferably between (-0.12 D) and +0.12 D, these values being included.

The mean power Rm is preferably forced to be negative.

The mean power Rm is preferably forced by considering an object distance between 30cm and 80cm, these values being included. Alternatively, the mean power Rm is forced by considering an infinite object distance

The orthogonal projections of the first vision point and the second vision point on a vertical axis are preferably separated by a vertical distance between 11 mm and 22 mm, preferably between 11 mm and 18 mm.

The ophthalmic lens comprising a nasal side and a temporal side, the orthogonal projections of the first vision point and the second vision point on a horizontal axis are preferably separated by a horizontal distance between 0 to 4 mm, preferably between 0 to 2.5 mm; said second point being closer to the nasal side than the first point.

The method preferably further comprises providing the ophthalmic lens with a cylinder power $C_2$ at the second vision point, wherein the absolute value of cylinder power $|C_2|$ is below 0.25 D, preferably below 0.12D.

The method alternatively further comprises providing the ophthalmic lens with a non-null value of cylinder power $C_2$ and a cylinder axis $\gamma_2$ in the second vision point wherein $|C_2\text{-}C_1|<0.25$ D, preferably $|C_2 - C_1|<0.12$ D and $|\gamma_2 - \gamma_1| < 14°$, preferably $|\gamma_2\text{-}\gamma_1| < 3°$. Preferably, the resulting astigmatism is below $\left| \mathrm{S}_1 + \dfrac{C_1}{2} - \mathrm{Rm} \right|$ for any gaze angle below 36°.

Alternatively, the method further comprises an ophthalmic lens having a null cylinder power $C_1$, wherein the resulting astigmatism is below $|S_1 - \mathrm{Rm}|$ for any gaze angle below 36°.

The method preferably further comprises:

- obtaining a series of preconceived ophthalmic lenses; and
- selecting amongst the series of preconceived ophthalmic lenses the most suited one based on a far vision prescription and on the forced mean power value Rm,

wherein the preconceived ophthalmic lenses diverge stepwise from one another through at least one of:

- the sphere power value at the first vision point;
- the cylinder power value at the first vision point;
- the position of the second vision point relative to the first vision point; and
- the mean power value at the second vision point.

Drawings

Other objectives, features and advantages will become apparent upon reading the following description in reference to the illustrating and non-limiting drawings, amongst which:

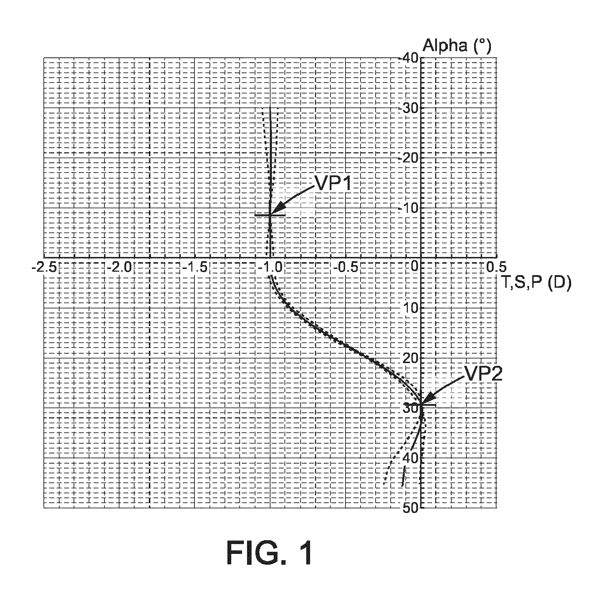

Figures 1 to 3 are graphs showing respectively the min, max (dotted lines) and mean (solid line) powers as a function of the eye vertical gaze angle, alpha $\alpha$, along the meridian line; a mean sphere power map; and a resulting astigmatism map for a first example of ophthalmic lens obtainable with the method of the invention;

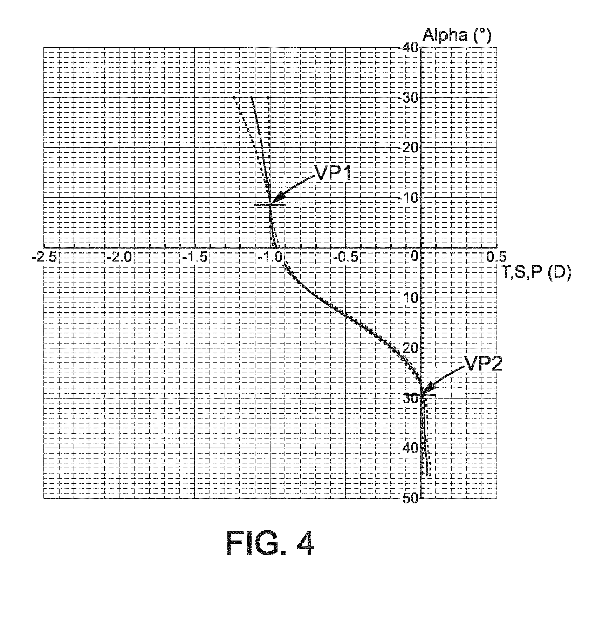

Figures 4 to 6 are graphs showing respectively the min, max (dotted lines) and mean (solid line) powers as a function of the alpha angle $\alpha$ along the meridian line; a mean sphere power map; and a resulting astigmatism map for a second example of ophthalmic lens obtainable with the method of the invention;

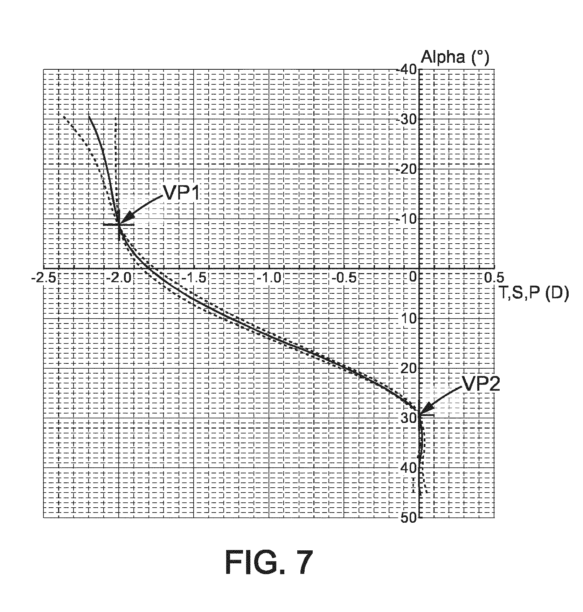

Figures 7 to 9 are graphs showing respectively the min, max (dotted lines) and mean (solid line) powers as a function of the alpha angle $\alpha$ along the meridian line, a mean sphere power map and a resulting astigmatism map for a third example of ophthalmic lens obtainable with the method of the invention;

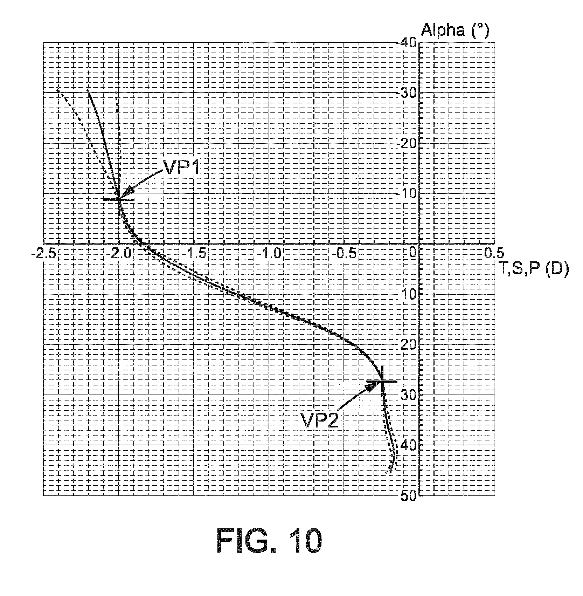

Figures 10 to 12 are graphs showing respectively the min, max (dotted lines) and mean (solid line) powers as a function of the alpha angle $\alpha$ along the meridian line; a mean sphere power map; and a resulting astigmatism map for a forth example of ophthalmic lens obtainable with the method of the invention;

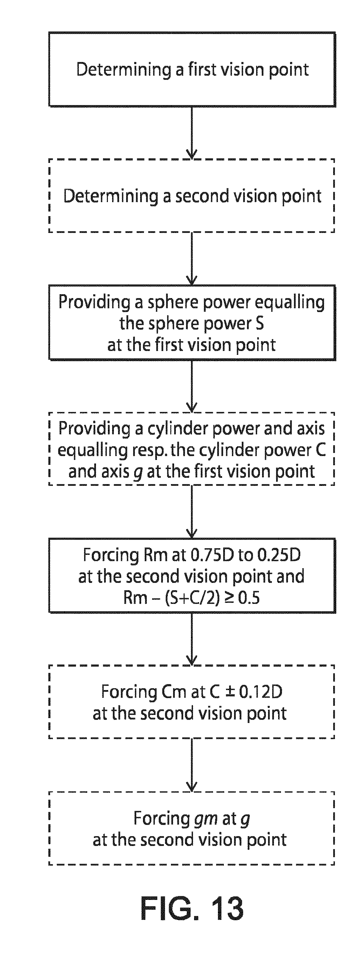

Figure 13 is a diagram showing the different steps of the method according to the invention; and

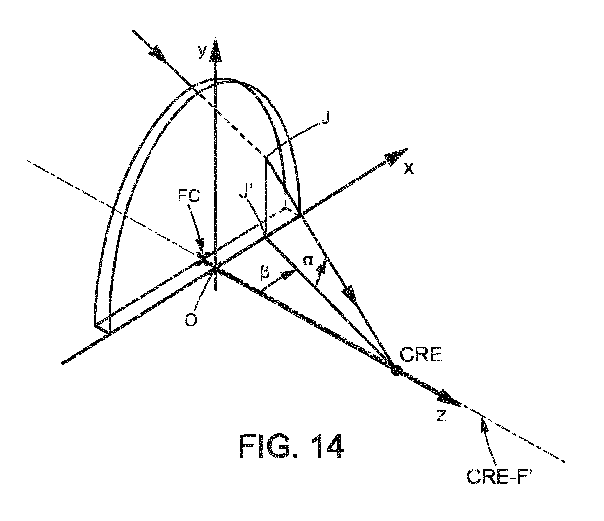

Figure 14 is a diagram showing the definition of a gaze direction;

in the figures, **VP1** indicates the first vision point, **VP2** the second vision point, **ML** the optical median line, **NS** the nasal side and **TS** the temple side.

Description

A method for determining an ophthalmic lens according to the invention will now be described with reference to figure 13.

The terms "ophthalmic lens" refer to a finished ophthalmic lens either before or after edging to be fitted in a spectacle frame.

In the current document, a "point" or a "vision point" on the surface of an ophthalmic lens materializes the intersection of a gaze direction with one of the two faces of the ophthalmic lens in worn conditions. In the followings, when two points are considered on the lens, the two points are considered on the same surface of the ophthalmic lens.

The ophthalmic lens is intended to be worn in front of an eye of a wearer, and comprises a first vision point and a second vision point located below the first vision point. This wearer has prescription data. The wordings "prescription data", also called "wearer's prescription", are known in the art. Prescription data refers to one or more data obtained for the wearer and indicating for at least an eye, preferably for each eye, a prescribed sphere power S, and/or a prescribed cylinder power C and a prescribed cylinder axis $\gamma$ suitable for compensating the ametropia of one or each eye of the wearer at far vision and, if suitable, a prescribed addition suitable for compensating the presbyopia of each of their eyes at near vision.

In the following description, when referring to the ophthalmic lens, this latter is considered in a position in which it is worn by the wearer. Thus, if a first point on the surface of the ophthalmic lens is said to be higher than a second vision point on the same surface, this means that once the wearer wears the ophthalmic lens, the first vision point is situated at a higher height than the second vision point. When it is said that the ophthalmic lens comprises a temporal side and a nasal side, the temporal side designates the lateral peripheral portion of the ophthalmic lens situated closer to the temple and the nasal side the lateral peripheral portion of the ophthalmic lens situated closer to the nose when the wearer wears the ophthalmic lens. Thus, for an ophthalmic lens intended for a left eye and seen from its back side, the temporal side is at the left side of the wearer and the nose side is at the right side; and for an ophthalmic lens intended for a right eye, the temporal side is at the right side of the wearer and the nose side is at the left side.

In the present invention, the prescription data comprise a sphere power $S_1$ for the eye and optionally a cylinder power $C_1$ with a cylinder axis $\gamma_1$ for said eye, with $(-3\,\mathrm{D}) \leq S_1 + \dfrac{C_1}{2} \leq -0.5\mathrm{D}$. In other words, the wearer is a slight myope. Preferably the prescription data are such that $(-2\,\mathrm{D}) \leq S_1 + \dfrac{C_1}{2} \leq -0.5\mathrm{D}$

The method comprises determining an ophthalmic lens by taking into account the sphere power $S_1$ and the cylinder power $C_1$ when this latter is comprised in the prescription, without taking into account any addition value. Therefore, contrary to methods for determining progressive or bifocal ophthalmic lenses where an addition value is needed, the present method and its result is independent from any addition value.

When the cylinder power C1 is null, the sphere power S1 corresponds to the power necessary to correct the ametropia. When the cylinder power C1 is not null, a power equalling S1 at the direction angle $\gamma$1 and a power equalling S1 + C1 at the direction angle $\gamma$1 + 90° are necessary to compensate both the ametropia and the astigmatism, as known by the person skilled in the art. Also, the term "mean power" refers to $S_1 + \dfrac{C_1}{2}$, whether or not C1 is null.

Determining the ophthalmic lens comprises:

a. providing at the first vision point the sphere power $S_1$ and optionally the cylinder power $C_1$ with the cylinder axis $\gamma_1$;

b. forcing a mean power Rm at the second vision point, such that:

$$-0.75\,D \leq Rm \leq 0.25D,$$

and

$$0.5\,D \leq Rm - \left( S_1 + \frac{C_1}{2} \right)$$

The first vision point is preferably the far vision point of the ophthalmic lens. The far vision point is a point on one of the lens surface, usually the front surface, and is defined with respect to the fitting cross and/or optionally micro-circles engraved in the lenses. Its location is defined in the product datasheets provided by the lens manufacturer and maybe outlined by stampings. The far vision point position roughly corresponds to the gaze direction of the wearer when the latter is looking at far distance (infinite).

A "gaze direction" can be defined as a couple of coordinates $(\alpha, \beta)$, taking the rotation centre of the corresponding eye CRE as the origin of the coordinate system. A horizontal line CRE-F' passing through the centre of the corresponding eye and extending up to the fitting cross of the lens is taken as the 0 for both angles $\alpha$ and $\beta$. Both coordinates are defined as follows. One gaze direction can be represented by a line originated from CRE and passing through a point J on the lens back side, J' is the orthogonal projection of J onto a horizontal plane comprising the horizontal line CRE-F', angle $\alpha$ is the angle between CRE-J' and CRE-J, angle $\beta$ is the angle between CRE-F' and CRE-J' (See figure 14.).

The second vision point is preferably located in a zone of the ophthalmic lens corresponding to the gaze directions used by the wearer when reading books. Apart from the advantages already mentioned, the fact that the mean power Rm at the second vision point is forced at -0.75 D to 0.25D means that the prism may be almost null if no prism thinning is applied. It is also possible, for children having myopia evolution, to combine close to zero power in the second vision point with prescribed horizontal prism in near vision and thus providing a better myopia evolution management, particularly for exophoric children.

In one embodiment, the orthogonal projections of the first vision point and the second vision point on a vertical axis are separated by a vertical distance, also called progression length, from 11 mm to 22 mm, preferably between 11 mm and 18 mm.

Alternatively or additionally, the second vision point is typically shifted to one side of the ophthalmic lens. If the ophthalmic lens is divided between nasal side (side closer to the nose) and a temporal side (side closer to the temple), then the second vision point is usually closer to the nasal side than the first vision point. In such case, the orthogonal projections of the first vision point and the second vision point on a horizontal axis are separated by a horizontal distance between 0 and 4 mm, preferably between 0 and 2.5 mm. The second vision point is advantageously a point of the meridian line. The meridian line corresponds to an imaginary line on one of the lens surface where each of its points is the intersection between the lens surface and one of the natural gaze directions of the wearer when the wearer looks from top to bottom passing through the first vision point where he is looking at far distance, and the second vision point where he is looking at near distance. The meridian line is usually straight and vertical from top down to the first vision point. Somewhere below the first vision point, it starts to shift to the nasal side of the ophthalmic lens.

The mean power Rm of the second vision point equals to $S_2 + \dfrac{C_2}{2}$, S2 being the sphere power at the second vision point and $C_2$ being the cylinder power.

When it is said that the mean power Rm, or any other value, is "forced" at the second vision point at a value or within a certain range of values, it must be understood that the value or within the range of values is a deliberate active choice and not merely the fortuitous result of another method step. In other words, the sphere power $S_2$ and the cylinder power $C_2$ of the second vision point are chosen in the objective that the condition forced on the mean power Rm is fulfilled, especially irrespective to any addition value. It can also be said that the condition on the mean power Rm is a constraint imposed on the step of determining the ophthalmic lens.

More particularly, when $(-3\,D) \leq S_1 + \dfrac{C_1}{2} < (-1.5\,D),$ the mean power Rm is preferably forced at -0.75 D to 0 D, these value being included. In a variant corresponding to the case where $(-1.5\,\mathrm{D}) \le S_1 + \dfrac{C_1}{2} \le 0\,\mathrm{D}$, the mean power Rm is preferably forced at -0.25 D to 0.25 D, these values being included. More preferably, in the latter case, the mean power Rm is forced at -0.12 D to 0.12 D, these values being included.

Alternatively, the mean power Rm is forced to be negative. This constraint may be advantageous to bring the near vision power closer to the far vision one resulting in a limitation of optical aberrations. Another advantage is that the remaining negative mean power at the second vision point provides the possibility to have a clear vision at intermediate distance when gazing through a zone above or around the second vision point.

In one particular embodiment, the mean power Rm perceived by the wearer when gazing in the direction of the second vision point is calculated by considering an object plane at a distance between 30 cm and 80 cm, these values being included. Alternatively, the main power Rm is forced by considering an infinite object distance. In a variant, the mean power Rm is force to be 0 D.

When the prescription data comprises a cylinder power value $C_1$, the method may further comprise providing the ophthalmic lens with a cylinder power $C_2$ at the second vision point where the absolute value of the cylinder power $|C_2|$ is forced to be below 0.25 D, preferably below 0.12 D. Alternatively, the method may further comprise providing the ophthalmic lens with a non-null value of cylinder power $C_2$ and a cylinder axis $\gamma_2$ in the second vision point wherein $|C_2 - C_1| < 0.25$ D, preferably $|C_2 - C_1| < 0.12$ D, and $|\gamma_2 - \gamma_1| < 14°$, preferably $|\gamma_2 - \gamma_1| < 3°$. Additionally, the resulting astigmatism is below $\left| S_1 + \dfrac{C_1}{2} - \mathrm{Rm} \right|$ for any gaze angle below 36° computed as $\sqrt{\alpha^2 + \beta^2}$ when $\alpha$ and $\beta$ are expressed in degrees. The variation in power (sphere power and cylinder power) from the first vision point to the second vision point induces resulting astigmatism (cylinder power) on the whole lens. The resulting astigmatism is the difference between the cylinder power that is prescribed and the astigmatism generated by the lens. It is also known as the unwanted astigmatism by the person skilled in the ophthalmic field. The variation in power is adapted so that the resulting astigmatism is minimized throughout the lens and does little trouble the wearer.

During use of the ophthalmic lens, the gaze of the wearer lies most of the time close to the meridian line. Therefore, the variation in power between the first vision point and the second vision point is adapted so that the resulting astigmatism along the meridian line is below 0.25D for any gaze angle direction between the first vision point and the second vision point.

Since young people are sensitive to the astigmatic distortions at the side, a soft design as known in the art is preferred. Therefore, determining the ophthalmic lens comprises providing a soft design exhibiting, along the meridian line, a gradual change of myopic power towards zero at the second vision point.

Determining the ophthalmic lens may either mean that a new ophthalmic lens is determined or a best suited one is determined from a series of preconceived ophthalmic lenses.

In this latter case, the method comprises:

   a. obtaining a series of preconceived ophthalmic lenses; and
   b. selecting amongst the series of preconceived ophthalmic lenses the most suited one based on a far vision prescription and on the forced mean power value Rm,

wherein the preconceived ophthalmic lenses diverge stepwise from one another through at least one of:

   a. the sphere power value at the first vision point;
   b. the cylinder power value at the first vision point;
   c. the cylinder axis value at the first vision point;
   d. the position of the second vision point relative to the first vision point; and
   e. the mean power value at the second vision point.

In one embodiment, the preconceived ophthalmic lenses diverge stepwise from one another through the sphere power value at the first vision point with a power pitch of Ps and the preconceived ophthalmic lens with a sphere power $S_L$ which is less than Ps from the sphere power $S_1$ at the first vision point ($|S_L - S_1| \le$ Ps) is selected. Preferably, Ps is 0.25 D. If there are more than one preconceived ophthalmic lenses that satisfy this inequation, then any of them may be selected, or preferably the one closest to $S_1$ is selected, in other words, the one which corresponds to the result of $\min_k(|S_k - S_1|)$ -

In one embodiment, the preconceived ophthalmic lenses diverge stepwise from one another through the cylinder power value at the first vision point with a power pitch of Pc and the preconceived ophthalmic lens with a cylinder power $C_L$ which is less than Pc from the cylinder power $C_1$ at the first vision point ($|C_L - C_1| \leq Pc$) is selected. Preferably, Pc is 0.25 D. If there are more than one preconceived ophthalmic lenses that satisfy this inequation, then any of them may be selected, or preferably the one closest to $C_1$ is selected, in other words, the one which corresponds to the result of $\min_k(|C_k - C_1|)$.

In one embodiment, the preconceived ophthalmic lenses diverge stepwise from one another through the cylinder axis value at the first vision point with an axis pitch of Pγ and the preconceived ophthalmic lens with a cylinder axis $\gamma_L$ which is less than Pγ from the desired cylinder axis g at the first vision point ($|\gamma_L - \gamma_1| \leq Pγ$) is selected. Pγ is preferably 3°, preferably 2°. If there are more than one preconceived ophthalmic lenses that satisfy this inequation, then any of them may be selected, or preferably the one closest to $\gamma_1$ is selected, in other words, the one which corresponds to the result of $\min_k(|\gamma_k - \gamma_1|)$.

The position of the second vision point may be defined through a vertical distance and a horizontal distance from the first vision point. The vertical, respectively horizontal, distance is the distance between the projections of both first and second vision points on a vertical, respectively horizontal, axis. The preconceived ophthalmic lenses may thus diverge stepwise from one another through the vertical distance with a vertical pitch of Py. The preconceived ophthalmic lens with the vertical distance $\Delta y_L$ which is less than Py from the desired vertical distance $\Delta y$ ($|\Delta y_L - \Delta y| \leq Py$) is selected. If there are more than one preconceived ophthalmic lenses that satisfy this inequation, then any of them may be selected, or preferably the one closest to $\Delta y$ is selected, in other words, the one which corresponds to the result of $\min_k(|\Delta y_k - \Delta y|)$.

Alternatively, the preconceived ophthalmic lenses may diverge stepwise from one another through the horizontal distance with a horizontal pitch of Px. The preconceived ophthalmic lens with the horizontal distance $\Delta x_L$ which is less than Px from the desired horizontal distance $\Delta x$ ($|\Delta x_L - Ax| \leq Px$) is selected. If there are more than one preconceived ophthalmic lenses that satisfy this inequation, then any of them may be selected, or preferably the one closest to $\Delta x$ is selected, in other words, the one which corresponds to the result of $\min k(|\Delta x_k - \Delta x|)$.

Still alternatively, the preconceived ophthalmic lenses may diverge stepwise from one another through both the vertical distance with a vertical pitch of Py and the horizontal distance with a horizontal pitch of Px. The preconceived ophthalmic lens which satisfies the following inequation is selected:

$$\left| \sqrt{\Delta y_L{}^2 + \Delta x_L{}^2} - \sqrt{\Delta y^2 + \Delta x^2} \right| \leq \sqrt{Py^2 + Px^2} ,$$

wherein $\Delta y$, $\Delta y$, $Ay_L$ and $\Delta x_L$ having the same meaning as above. If there are more than one preconceived ophthalmic lenses that satisfy this inequation, then any of them may be selected, or preferably the one closest to $\sqrt{\Delta y^2 + \Delta x^2}$

is selected, in other words, the one which corresponds to the result of $\min_k \left( \left| \sqrt{\Delta y_k{}^2 + \Delta x_k{}^2} - \sqrt{\Delta y^2 + \Delta x^2} \right| \right)$.

In one embodiment, the preconceived ophthalmic lenses diverge stepwise from one another through the mean power value at the second vision point with a mean power pitch of Pr and the preconceived ophthalmic lens with a mean power value $Rm_L$ which is less than Pr from the desired mean power value Rm at the second vision point ($|Rm_L Rm| \leq$ Pr) is selected. If there are more than one preconceived ophthalmic lenses that satisfy this inequation, then any of them may be selected, or preferably the one closest to Rm is selected, in other words, the one which corresponds to the result of $\min_k(|Rm_k - Rm|)$.

In case the preconceived ophthalmic lenses diverge stepwise from one another through more than one parameter mentioned above, such as al... ai with pitches Pal... Pai, the preconceived ophthalmic lens which satisfies the following inequation is selected:

$$\left| \sqrt{a1_L{}^2 + ... + ai_L{}^2} - \sqrt{a1_D{}^2 + ... + ai_D{}^2} \right| \leq \sqrt{Pa1^2 + ... + Pai^2} ,$$

where L refers to the preconceived ophthalmic lens and D the desired ophthalmic lens. If there are more than one preconceived ophthalmic lenses that satisfy this inequation, then any of them may be selected, or preferably the one

closest to $\sqrt{a1_D{}^2 + ... + ai_D{}^2}$ is selected, in other words, the one which corresponds to the result of $\min_k($

$$\left| \sqrt{al_k{}^2 + \ldots + ai_k{}^2} - \sqrt{al_D{}^2 + \ldots + ai_D{}^2} \right| \Big).$$

Alternatively, one or another parameter may take precedence over the other. In such case, priority levels are set for each parameter through which the preconceived ophthalmic lenses stepwise diverge from one another. Then, preconceived ophthalmic lenses that satisfy the parameter with the highest priority level are selected for the next round with the parameter with the second highest priority level and so on. If more than one parameter have same priority level, they are handled together in the same manner as described in the previous paragraphs.

Determining the ophthalmic lens described above encompasses also the surface approach as known in the art. For example, if the surface approach is chosen, determining the ophthalmic lens may comprise imposing curvature constrains to the front and/or back surfaces of the ophthalmic lens to force the front and back surfaces to exhibit similar mean curvatures at the second vision point to force the curvature of the front (respectively back) surface to compensate almost fully the curvature of the back (respectively front) surface.

Examples

In the following examples, optics characteristics will be used to illustrate exemplified ophthalmic lenses obtained from the method of the invention as described above. The optical meridian line expressed in gaze angle $(\alpha,\beta)$ corresponds to lens meridian line expressed in (x,y). Each point $(\alpha,\beta)$ in the optical meridian line corresponds to a point (x,y) in meridian line. Alpha angle $\alpha$ corresponds to the up-down movement of the eye, while beta angle $\beta$ corresponds to the left-right movement of the eye. In the graphs described below, the alpha angle $\alpha$ will be negative when looking above the fitting cross; thus looking upwards. The alpha angle $\alpha$ will be positive when looking under the fitting cross; thus looking downwards. Also, the beta angle will be positive when looking towards the nasal side and negative when looking towards the temporal side.

Three kinds of graphs will be used:

a. a first graph shows the min, max (dotted lines) and mean power (solid line) as a function of the alpha angle $\alpha$ along the optical meridian line as perceived by a wearer through the ophthalmic lens;

b. a second graph shows a mean sphere power map as perceived by a wearer through the ophthalmic lens, the lines are sphere isopower lines, both first and second vision points are indicated on the optical meridian line;

c. a third graph shows a resulting astigmatism map as perceived by a wearer through the ophthalmic lens, the resulting astigmatism being mainly due to the variation of sphere power within the ophthalmic lens; the optical meridian line is also shown and the lines represent cylinder isopower lines.

The resulting astigmatism is usually unwanted since it introduces zones that are unsharp for the wearer when the wearer looks through these zones.

*Example 1*

Figures 1 to 3 show three graphs illustrating the characteristics of a first exemplified ophthalmic lens that has been determined using the method according to the invention. In order to obtain this ophthalmic lens, prescription data comprising a sphere power of (-1 D) (without any cylinder power and axis, in other words, the cylinder power is null) have been used. A zero mean power Rm has been forced onto the second vision point of the ophthalmic lens. The progression length is 18 mm.

As can be seen in figure 1, the sphere power is very stable at -1 D around the first vision point (alpha angles $\alpha$ from -30° to about 5°, first vision point being at about $\alpha$=-8.5°) then it progressively decreases until it reaches 0 at the second vision point located at alpha angle $\alpha$ = 29° and remains between -0.25 D and 0 below the second vision point.

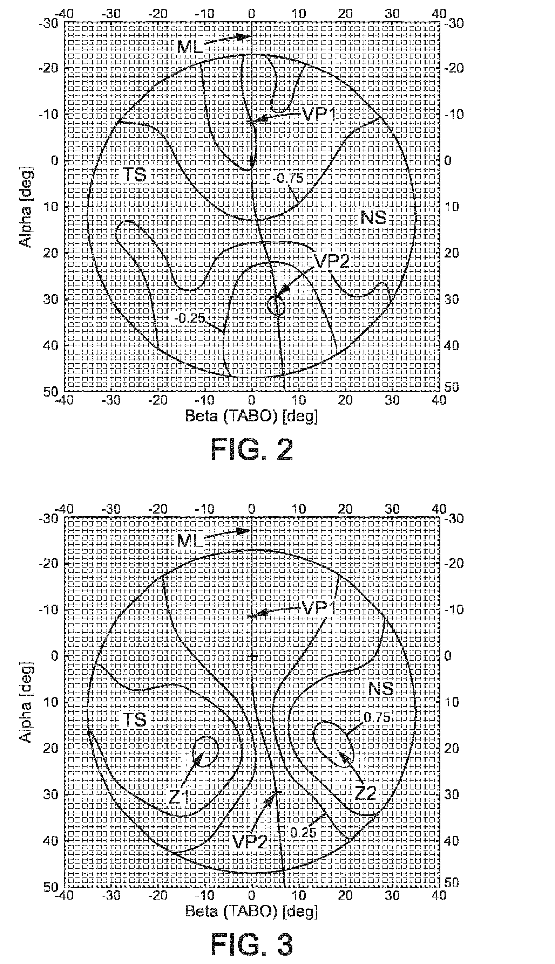

Figure 2 shows the mean sphere power map for this ophthalmic lens. Within the roughly circular zone below the second vision point, the mean power is null.

The variation in sphere power shown in Figure 2 mainly induces the resulting astigmatism shown in Figure 3. As can be seen, it has been possible to provide a wide zone above the first vision point and below the second vision point with low resulting astigmatism (below 0.25 D). Therefore, aberrations in the zones that are most used by the wearer are strongly limited. Strong aberrations (correspond to zone with resulting astigmatism higher than 0.75 D) are restricted to two relatively small zones **Z1,** Z2 on both sides of the optical meridian line.

*Example 2*

Figures 4 to 6 show three graphs illustrating the characteristics of a second exemplified ophthalmic lens that has been determined using the method according to the invention. In order to obtain this ophthalmic lens, prescription data comprising a sphere power of (-1 D) (without any cylinder power and axis, in other words, the cylinder power is null) have been used. A zero mean power Rm has been forced onto the second vision point. The progression length is 17 mm.

As can be seen in figure 4, the mean sphere power is rather stable at -1 D around the first vision point (alpha angles $\alpha$ from -10° to about -5°, first vision point being at about $\alpha$ = -8.5°) then it progressively decreases until it reaches 0 at the second vision point at alpha angle $\alpha$ = 27.5° and remains positive and below 0.05 D below the second vision point.

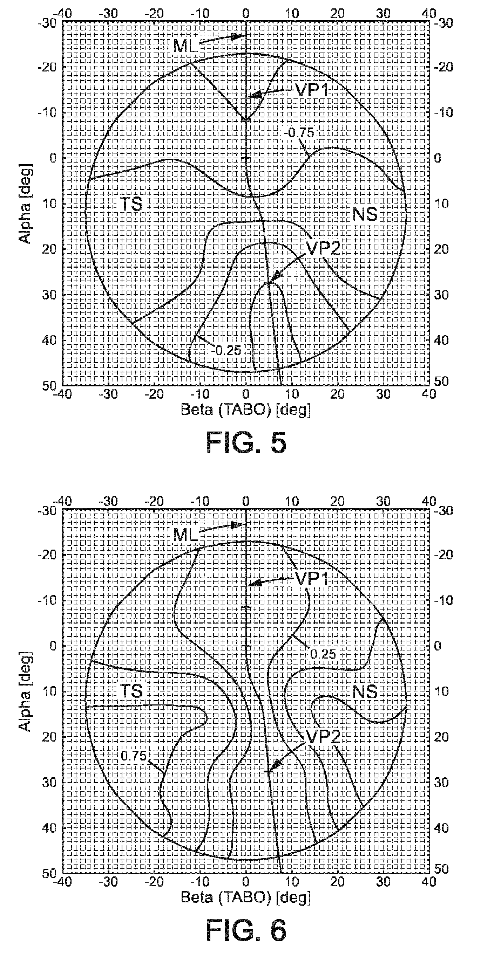

Figure 5 shows the mean sphere power map for this ophthalmic lens. Within the zone marked by an isopower line passing by the second vision point below the second vision point, the mean power is close to zero.

The variation in mean sphere power shown in Figure 5 induces the resulting astigmatism shown in Figure 6. As can be seen, it has been possible to provide a wide zone below the second vision point with low resulting astigmatism (below 0.25 D).

*Example 3*

Figures 7 to 9 show three graphs illustrating the characteristics of a third exemplified ophthalmic lens that has been determined using the method according to the invention. In order to obtain this ophthalmic lens prescription data comprising a sphere power of (-2 D) (without any cylinder power and axis, in other words, the cylinder power is null) have been used. A zero mean power Rm has been forced onto the second vision point as shown in the figure. The progression length is 17 mm.

As can be seen in figure 7, the mean sphere power of -2D is at the first vision point at alpha angles $\alpha$ =-8.5° and remains within a 5% discrepancy range from alpha angle $\alpha$ = -23° to alpha angle $\alpha$ = -3°. Then, it progressively decreases until it reaches 0 at the second vision point at alpha angle $\alpha$ = 29° and remains very close to that value below the second vision point.

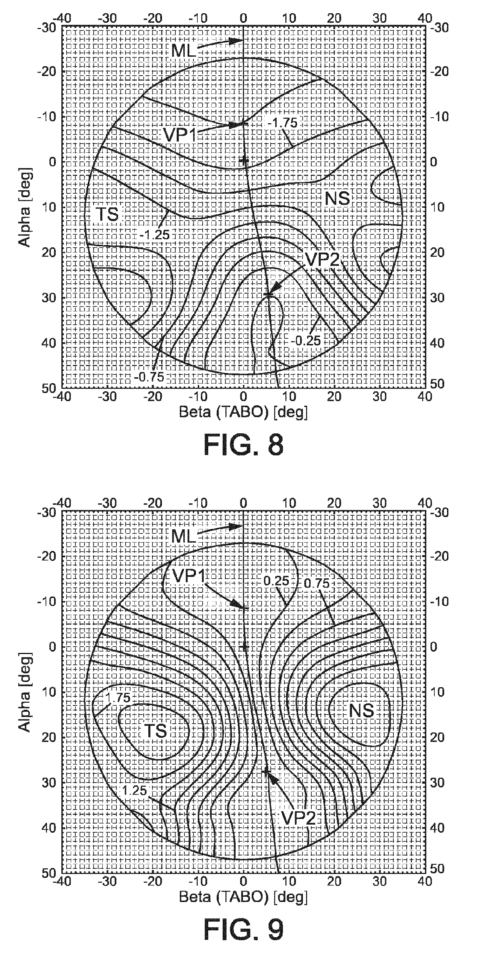

Figure 8 shows the sphere power map for this ophthalmic lens. Within the zone marked by an isopower line passing by the zone below the second vision point, the mean power is close to zero.

The variation in mean sphere power shown in Figure 8 induces the resulting astigmatism shown in Figure 9. As can be seen, it has been possible to provide a wide zone below the second vision point with low resulting cylinder power (below 0.25 D). In comparison with examples 1 and 2, aberrations increase more rapidly from the meridian line sidewards, which is expected since mean power variation between the first and second vision points is stronger.

*Example 4*

Figures 10 to 12 show three graphs illustrating the characteristics of a third exemplified ophthalmic lens that has been determined using the method according to the invention. In order to obtain this ophthalmic lens, prescription data comprising a sphere power of (-2 D) (without any cylinder power and axis, in other words, the cylinder power is null) have been used. A mean power Rm of -0.25 D has been forced onto the second vision point as shown in the figure. The progression length is 17 mm.

As can be seen in figure 10, the sphere power is at -2 D at the first vision point at alpha angles $\alpha$ = -9° and remains within a 5% discrepancy range from alpha angle $\alpha$ = -21 to alpha angle $\alpha$ = -1.5°. Then, it progressively decreases until it reaches -0.25 D at the second vision point at alpha angle $\alpha$ = 27.5° and remains very close to that value below the second vision point although it slightly increases up to about -0.15 D.

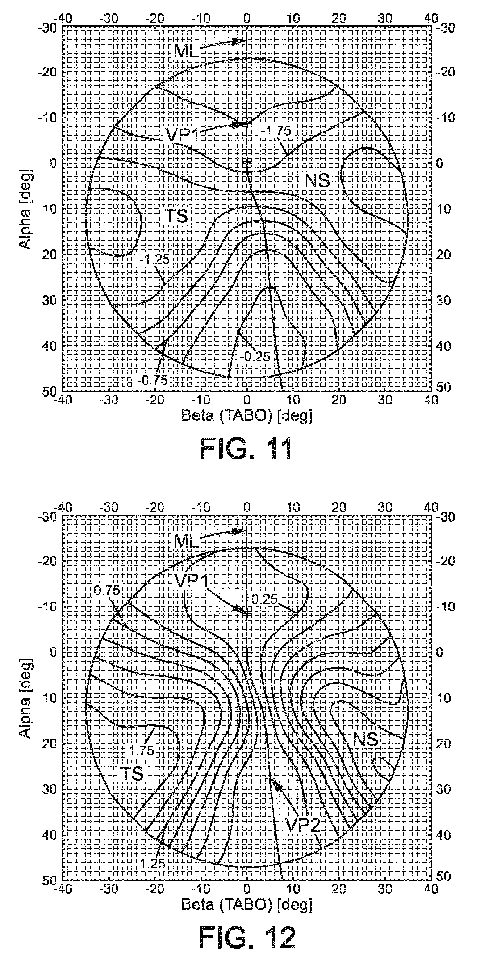

Figure 11 shows the mean sphere power map for this ophthalmic lens. Within the zone below the -0.25D isopower line passing by the second vision point, the mean power is close to -0.25 D.

The variation in mean sphere power shown in Figure 11 induces the resulting astigmatism shown in Figure 12. As can be seen, it has been possible to provide a wide zone below the second vision point with low resulting astigmatism (below 0.25 D). In comparison with examples 1 and 2, and just like example 3, aberrations increase more rapidly from the meridian line sidewards, which is expected since mean power variation between the first and second vision points is stronger but astigmatic peaks are lower and at the periphery compared to example 3.

**Claims**

**1.** A method for determining an ophthalmic lens intended to be worn in front of an eye of a wearer, the ophthalmic lens comprising a first vision point and a second vision point located below the first vision point, wherein said wearer has prescription data, wherein said prescription data comprises a sphere power $S_1$ for said eye of the wearer and optionally a cylinder power $C_1$ with a cylinder axis $y_1$ for said eye, with $(-3 \, D) \le S_1 + \dfrac{C_1}{2} \le -0.5 D,$ the method comprising determining an ophthalmic lens by taking into account the sphere power $S_1$ and optionally the cylinder power $C_1$, without taking into account any addition value, determining the ophthalmic lens comprising:

- providing said sphere power $S_1$ and optionally said cylinder power $C_1$ with said cylinder axis $\gamma_1$, at the first vision point;
- forcing a mean sphere power Rm at the second vision point, such that

$$(-0.75 \, D) \le \mathrm{Rm} \le 0.25 D \text{ and } 0.5 \, D \le \mathrm{Rm} - (S_1 + \frac{C_1}{2}).$$

**2.** The method of claim 1, wherein when $(-3 \, D) \le S_1 + \dfrac{C_1}{2} < (-1.5 \, D),$ the mean power value Rm is forced to be between at -0.75 D to 0 D, these values being included.

**4.** The method of claim 1, wherein when $(-1.5 \, D) \le S_1 + \dfrac{C_1}{2} \le 0 \, D,$ the mean power value Rm is forced to be between -0.25 D and +0.25 D, these values being included, preferably between (-0.12 D) and +0.12 D, these values being included.

**5.** The method of claim 3, wherein the mean power Rm is forced to be negative.

**6.** The method of any claim 1 to 4, wherein the mean power Rm is forced by considering an object distance between 30 cm and 80 cm, these values being included.

**7.** The method of any claim 1 to 4, wherein the mean power Rm is forced by considering an infinite object distance

**8.** The method of any claim 1 to 6, wherein the orthogonal projections of the first vision point and the second vision point on a vertical axis are separated by a vertical distance between 11 mm and 22 mm, preferably between 11mm and 18mm.

**9.** The method of any claim 1 to 6, the ophthalmic lens comprising a nasal side and a temporal side, wherein the orthogonal projections of the first vision point and the second vision point on a horizontal axis are separated by a horizontal distance between 0 to 4 mm, preferably between 0 to 2.5 mm; said second point being closer to the nasal side than the first point.

**10.** The method of any claim 1 to 9, further comprising providing the ophthalmic lens with a cylinder power $C_2$ at the second vision point, wherein the absolute value of the cylinder power $|C_2|$ is below 0.25 D, preferably below 0.12 D.

**11.** The method of any claim 1 to 9, further comprising providing the ophthalmic lens with a non-null value of cylinder power $C_2$ and a cylinder axis $\gamma_2$ in the second vision point wherein |C2-C1|<0.25 D, preferably $|C_2 - C_1| < 0.12 \, D$, and $|\gamma_2 - \gamma_1| < 14°$, preferably $|\gamma_2 - \gamma_1| < 3°$ .

**12.** The method of claim 11, wherein the resulting astigmatism is below $\left| S_1 + \dfrac{C_1}{2} - \mathrm{Rm} \right|$ for any gaze angle below 36°.

**13.** The method of any claim 1 to 9, further comprising an ophthalmic lens having a null cylinder power $C_1$, wherein the resulting astigmatism is below $|S_1 - \mathrm{Rm}|$ for any gaze angle below 36°.

**14.** The method of any claim 1 to 12, further comprising:

- obtaining a series of preconceived ophthalmic lenses; and
- selecting amongst the series of preconceived ophthalmic lenses the most suited one based on a far vision prescription and on the forced mean power value Rm,

wherein the preconceived ophthalmic lenses diverge stepwise from one another through at least one of:

- the sphere power value at the first vision point;
- the cylinder power value at the first vision point;
- the position of the second vision point relative to the first vision point; and
- the mean power value at the second vision point.

FIG. 1

FIG. 2

FIG. 3

FIG. 4

FIG. 5

FIG. 6

FIG. 7

FIG. 8

FIG. 9

FIG. 10

FIG. 11

FIG. 12

```
┌─────────────────────────────────────┐
│                                     │
│     Determining a first vision point │
│                                     │
└─────────────────────────────────────┘
                  │
                  ▼
┌ ─ ─ ─ ─ ─ ─ ─ ─ ─ ─ ─ ─ ─ ─ ─ ─ ─ ─ ┐
│                                     │
│   Determining a second vision point  │
│                                     │
└ ─ ─ ─ ─ ─ ─ ─ ─ ─ ─ ─ ─ ─ ─ ─ ─ ─ ─ ┘
                  │
                  ▼
┌─────────────────────────────────────┐
│   Providing a sphere power equalling  │
│          the sphere power S          │
│        at the first vision point     │
└─────────────────────────────────────┘
                  │
                  ▼
┌ ─ ─ ─ ─ ─ ─ ─ ─ ─ ─ ─ ─ ─ ─ ─ ─ ─ ─ ┐
│   Providing a cylinder power and axis │
│   equalling resp. the cylinder power C│
│    and axis g at the first vision point│
└ ─ ─ ─ ─ ─ ─ ─ ─ ─ ─ ─ ─ ─ ─ ─ ─ ─ ─ ┘
                  │
                  ▼
┌─────────────────────────────────────┐
│     Forcing Rm at 0.75D to 0.25D     │
│      at the second vision point and  │
│           Rm – (S+C/2) ≥ 0.5         │
└─────────────────────────────────────┘
                  │
                  ▼
┌ ─ ─ ─ ─ ─ ─ ─ ─ ─ ─ ─ ─ ─ ─ ─ ─ ─ ─ ┐
│      Forcing Cm at C ± 0.12D         │
│      at the second vision point      │
└ ─ ─ ─ ─ ─ ─ ─ ─ ─ ─ ─ ─ ─ ─ ─ ─ ─ ─ ┘
                  │
                  ▼
┌ ─ ─ ─ ─ ─ ─ ─ ─ ─ ─ ─ ─ ─ ─ ─ ─ ─ ─ ┐
│          Forcing gm at g             │
│      at the second vision point      │
└ ─ ─ ─ ─ ─ ─ ─ ─ ─ ─ ─ ─ ─ ─ ─ ─ ─ ─ ┘
```

Providing a sphere power equalling the sphere power S at the first vision point

Providing a cylinder power and axis equalling resp. the cylinder power C and axis $g$ at the first vision point

Forcing Rm at 0.75D to 0.25D at the second vision point and $Rm - (S+C/2) \geq 0.5$

Forcing Cm at $C \pm 0.12D$ at the second vision point

Forcing $gm$ at $g$ at the second vision point

# FIG. 13

FIG. 14

Europäisches
Patentamt

European
Patent Office

Office européen
des brevets

# EUROPEAN SEARCH REPORT

Application Number

EP 16 18 2072

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 343 861 B1 (KRIS DIMITRIOS JACK [AU] ET AL) 5 February 2002 (2002-02-05)<br>* column 1, line 1 - column 1, line 31 *<br>* column 1, line 40 - column 2, line 19 *<br>* column 3, line 35 - column 4, line 6 *<br>* column 4, line 31 - line 34 *<br>* claims 21-23 *<br>* column 2, line 57 - line 63 *<br>----- | 1,2,4-14 | INV.<br>G02C7/02 |
| X | US 2015/168743 A1 (DROBE BJÖRN [SG] ET AL) 18 June 2015 (2015-06-18)<br>* paragraph [0001] *<br>* paragraph [0031] - paragraph [0041] *<br>* paragraph [0044] *<br>* paragraph [0061] - paragraph [0062] *<br>* paragraph [0135] - paragraph [0137] *<br>----- | 1,2,4-13 | |
| X | US 2015/331255 A1 (SANKARIDURG PADMAJA RAJAGOPAL [AU] ET AL) 19 November 2015 (2015-11-19)<br>* paragraph [0006] *<br>* paragraph [0011] *<br>* paragraph [0018] - paragraph [0019] *<br>* paragraph [0026] *<br>* paragraph [0030] - paragraph [0033] *<br>----- | 1,2,4-13 | TECHNICAL FIELDS SEARCHED (IPC)<br><br>G02C |
| X | US 2011/317128 A1 (GUILLOUX CYRIL [FR] ET AL) 29 December 2011 (2011-12-29)<br>* paragraph [0006] - paragraph [0008] *<br>* paragraph [0017] *<br>* paragraph [0019] - paragraph [0020] *<br>* paragraph [0026] *<br>* paragraph [0057] *<br>* paragraph [0060] *<br>----- | 1,2,4-13 | |

-/--

The present search report has been drawn up for all claims

| Place of search | Date of completion of the search | Examiner |
|---|---|---|
| Munich | 5 December 2016 | Stadlmeyer, R |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

Europäisches
Patentamt

European
Patent Office

Office européen
des brevets

# EUROPEAN SEARCH REPORT

Application Number

EP 16 18 2072

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | US 2012/257161 A1 (VARNAS SAULIUS RAYMOND [AU]) 11 October 2012 (2012-10-11)<br>* paragraph [0008] *<br>* paragraph [0036] - paragraph [0039] *<br>* paragraph [0048] *<br>* paragraph [0107] - paragraph [0110] *<br>* paragraph [0119] - paragraph [0120] *<br>----- | 1,2<br><br>4-13 | |
| A | US 2010/208197 A1 (CARIMALO CELINE [FR] ET AL) 19 August 2010 (2010-08-19)<br>* paragraph [0038] *<br>* paragraph [0041] - paragraph [0042] *<br>----- | 1,2,4-13 | |
| | | | TECHNICAL FIELDS SEARCHED (IPC) |

The present search report has been drawn up for all claims

| Place of search | Date of completion of the search | Examiner |
|---|---|---|
| Munich | 5 December 2016 | Stadlmeyer, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 16 18 2072

This annex lists the patent family members relating to the patent documents cited in the above-mentioned European search report.
The members are as contained in the European Patent Office EDP file on
The European Patent Office is in no way liable for these particulars which are merely given for the purpose of information.

05-12-2016

| Patent document cited in search report | | Publication date | Patent family member(s) | | Publication date |
|---|---|---|---|---|---|
| US 6343861 | B1 | 05-02-2002 | AT | 235068 T | 15-04-2003 |
| | | | CA | 2307222 A1 | 23-12-1999 |
| | | | CN | 1275212 A | 29-11-2000 |
| | | | DE | 69906030 D1 | 24-04-2003 |
| | | | DE | 69906030 T2 | 20-11-2003 |
| | | | EP | 1034453 A1 | 13-09-2000 |
| | | | HK | 1032633 A1 | 17-12-2004 |
| | | | JP | 4750273 B2 | 17-08-2011 |
| | | | JP | 2002518705 A | 25-06-2002 |
| | | | MY | 128348 A | 31-01-2007 |
| | | | TW | 460706 B | 21-10-2001 |
| | | | US | 6343861 B1 | 05-02-2002 |
| | | | WO | 9966366 A1 | 23-12-1999 |
| US 2015168743 | A1 | 18-06-2015 | CN | 104520756 A | 15-04-2015 |
| | | | EP | 2880489 A1 | 10-06-2015 |
| | | | KR | 20150036145 A | 07-04-2015 |
| | | | US | 2015168743 A1 | 18-06-2015 |
| | | | WO | 2014019968 A1 | 06-02-2014 |
| US 2015331255 | A1 | 19-11-2015 | AU | 2013201501 A1 | 03-10-2013 |
| | | | AU | 2013232736 A1 | 02-10-2014 |
| | | | CA | 2867189 A1 | 19-09-2013 |
| | | | CN | 104272173 A | 07-01-2015 |
| | | | EP | 2825910 A1 | 21-01-2015 |
| | | | HK | 1201933 A1 | 11-09-2015 |
| | | | JP | 2015510152 A | 02-04-2015 |
| | | | KR | 20150005536 A | 14-01-2015 |
| | | | SG | 11201405687Q A | 27-11-2014 |
| | | | TW | 201348790 A | 01-12-2013 |
| | | | US | 2015331255 A1 | 19-11-2015 |
| | | | WO | 2013134825 A1 | 19-09-2013 |
| US 2011317128 | A1 | 29-12-2011 | CN | 102378936 A | 14-03-2012 |
| | | | EP | 2404212 A1 | 11-01-2012 |
| | | | US | 2011317128 A1 | 29-12-2011 |
| | | | WO | 2010100528 A1 | 10-09-2010 |
| US 2012257161 | A1 | 11-10-2012 | AU | 2010314756 A1 | 17-05-2012 |
| | | | CA | 2779675 A1 | 12-05-2011 |
| | | | CN | 102713729 A | 03-10-2012 |
| | | | EP | 2499536 A1 | 19-09-2012 |
| | | | JP | 5851411 B2 | 03-02-2016 |
| | | | JP | 2013510331 A | 21-03-2013 |
| | | | KR | 20120115231 A | 17-10-2012 |
| | | | US | 2012257161 A1 | 11-10-2012 |

EPO FORM P0459

For more details about this annex : see Official Journal of the European Patent Office, No. 12/82

page 1 of 2

**ANNEX TO THE EUROPEAN SEARCH REPORT
ON EUROPEAN PATENT APPLICATION NO.**

EP 16 18 2072

This annex lists the patent family members relating to the patent documents cited in the above-mentioned European search report.
The members are as contained in the European Patent Office EDP file on
The European Patent Office is in no way liable for these particulars which are merely given for the purpose of information.

05-12-2016

| Patent document cited in search report | Publication date | Patent family member(s) | | Publication date |
|---|---|---|---|---|
| | | WO 2011054058 A1 | | 12-05-2011 |
| US 2010208197 A1 | 19-08-2010 | CN | 101743501 A | 16-06-2010 |
| | | EP | 2150849 A1 | 10-02-2010 |
| | | FR | 2916864 A1 | 05-12-2008 |
| | | US | 2010208197 A1 | 19-08-2010 |
| | | WO | 2008149045 A1 | 11-12-2008 |

EPO FORM P0459

For more details about this annex : see Official Journal of the European Patent Office, No. 12/82

page 2 of 2